(19) Europäisches Patentamt
European Patent Office
Office européen des brevets

(11) **EP 2 406 202 B1**

(12) **FASCICULE DE BREVET EUROPEEN**

(45) Date de publication et mention
de la délivrance du brevet:
**01.08.2018 Bulletin 2018/31**

(21) Numéro de dépôt: **10710667.6**

(22) Date de dépôt: **10.03.2010**

(51) Int Cl.:
*C04B 35/482* (2006.01)          *C04B 35/626* (2006.01)
*B22D 41/32* (2006.01)

(86) Numéro de dépôt international:
**PCT/IB2010/051024**

(87) Numéro de publication internationale:
**WO 2010/103463 (16.09.2010 Gazette 2010/37)**

(54) **POUDRE DE ZIRCONE**

ZIRKONOXID-PULVER

ZIRCONIA POWDER

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **10.03.2009 FR 0951484**

(43) Date de publication de la demande:
**18.01.2012 Bulletin 2012/03**

(73) Titulaire: **Saint-Gobain Centre De Recherches
Et D'etudes Europeen
92400 Courbevoie (FR)**

(72) Inventeurs:
• **VILLERMAUX, Franceline
F-84000 Avignon (FR)**
• **CHAMPION, Thibault
F-84660 Maubec (FR)**
• **HIS, Christian
F-84300 Cavaillon (FR)**

(74) Mandataire: **Nony
11 rue Saint-Georges
75009 Paris (FR)**

(56) Documents cités:
EP-A- 1 810 956          WO-A-84/00030
FR-A- 2 894 957          GB-A- 1 528 148
US-A- 2 335 325          US-A- 4 308 067
US-A- 4 513 089          US-A1- 2009 011 215

• A. G. KARAULOV ET AL.: "Zirconia ramming
compounds tested in induction furnaces"
REFRACTORIES AND INDUSTRIAL CERAMICS,
vol. 15, no. 3-4, mars 1974 (1974-03), pages
239-243, XP002545784 Springer New York
• A. G. KARAULOV AND T. V. PISKUN: "Thermal
insulation powders of monoclinic zirconium
dioxide" REFRACTORIES AND INDUSTRIAL
CERAMICS, vol. 30, no. 7-8, juillet 1989 (1989-07),
pages 448-450, XP002545867 Springer New York

## Description

### Domaine technique

La présente invention se rapporte à une poudre comportant plus de 85% de zircone destinée à la fabrication de produits frittés. L'invention se rapporte également à un procédé de fabrication d'une telle poudre et à un produit fritté obtenu à partir d'une telle poudre.

### Etat de la technique

Des produits réfractaires frittés présentant des grains grossiers liés par une matrice et comportant plus de 85% en masse de zircone sont utilisés dans des applications dans lesquelles une bonne résistance mécanique et une résistance à la corrosion élevée sont requis à des températures supérieures à 1800°C. De tels produits sont notamment préconisés en incinération, verrerie, pétrochimie, dans les réacteurs pour fabriquer du noir de carbone (« Carbon Black » en anglais) et dans l'industrie cimentaire, pour protéger de l'agression d'un agent corrosif comme du laitier, du verre, ou des fumées chargées de poussières.

La structure de ces produits, associant des grains grossiers et une matrice, contribue de manière décisive aux propriétés mécaniques. Les produits à base de zircone présentant une structure très homogène, classiquement obtenus à partir de poudres de particules présentant une taille inférieure à 50 microns, sont donc considérés comme inadaptés à ces applications.

Par ailleurs, la résistance aux chocs thermiques des produits réfractaires frittés comportant plus de 85% en masse de zircone et présentant des grains grossiers liés par une matrice riche en zircone est généralement faible. En effet, pour faciliter le frittage, rendu difficile par la présence des grains grossiers, on ajoute classiquement au moins 1% de silice, considérée comme nuisible à la résistance aux chocs thermiques.

Alternativement, dans le cadre des industries verrière et métallurgique, EP 0 404 610 divulgue des produits présentant des grains grossiers liés par une matrice, la matrice étant formée à partir d'une poudre comportant moins de 1% de silice, et de préférence être sensiblement exempt de silice, mais comportant nécessairement de la zircone monoclinique. Au delà de 1%, la silice conduit en effet, suivant ce document, à la suppression de l'effet bénéfique de la zircone monoclinique. La faible teneur en silice rend cependant plus difficile le frittage, notamment lorsque les grains grossiers sont de grandes dimensions.

L'article «Zirconia ramming compounds tested in induction furnaces», A.G. Karaulov et al., Refractories and Industrial Ceramics, vol. 15, no. 3-4, 1974, décrit un produit à base de zircone comportant de la zircone monoclinique comme agent renforçant.

US 4,513,089 décrit un pisé sec à base d'oxyde de zirconium pour le revêtement d'un four à creuset de type induction.

US 4,308,067 décrit une composition réfractaire utile pour la construction d'un four verrier comprenant un matériau réfractaire fondu, un ciment hydraulique, une charge, des particules fines et un surfactant.

US 2,335,325 décrit un procédé de fabrication d'un réfractaire d'oxyde de zirconium à haute résistance au choc thermique.

Il existe donc un besoin pour un nouveau produit fritté à structure grossière présentant une bonne résistance mécanique, une bonne résistance aux chocs thermiques et un comportement en dilatation thermique sans anomalie importante.

Un but de l'invention est de répondre à ce besoin.

### Résumé de l'invention

Selon l'invention, on atteint ce but au moyen d'une poudre comportant plus de 85% de zircone, en pourcentage en masse, et constituée, pour un total de 100%, en pourcentages en masse sur la base des oxydes, de :

(a) plus de 92% de particules de zircone, la poudre comportant (avec (a) = (a1) + (a2)):

(a1) plus de 60% de particules de zircone présentant une taille supérieure à 50 microns, dites "particules d'agrégats de zircone", au moins 90% en masse desdites particules d'agrégats de zircone contenant moins de 50% en masse de phase monoclinique ;

(a2) plus de 15% de particules de zircone présentant une taille inférieure à 50 $\mu$m, dites « particules matricielles de zircone » ;

(b) 1 à 2% de particules de silice présentant une taille inférieure à 50 microns, dites "particules fines de silice";

(c) 0,3% à 5% de particules constituées d'un, deux ou trois oxydes choisis dans le groupe formé par CaO, MgO et $Y_2O_3$, dites "particules additionnelles d'oxydes", au moins 55% en masse desdites particules additionnelles présentant une taille inférieure à 50 $\mu$m ;

(d) moins de 1% de particules constituées « d'autres oxydes », de préférence choisis parmi $Al_2O_3$, $TiO_2$, $Fe_2O_3$, $Na_2O$, et $K_2O$,

la poudre étant également telle qu'elle comporte :

- plus de 5% de particules d'agrégats de zircone présentant une taille supérieure à 1 mm et, de préférence inférieure à 7 mm, voire inférieure à 5 mm , et
- de 8 à 20% de particules matricielles de zircone présentant une taille inférieure à 15 $\mu$m et comportant, pour plus de 95% de leur masse, une phase monoclinique, dites « particules matricielles de zircone monoclinique ».

Une telle poudre, dite « poudre selon l'invention », présente une composition chimique et une distribution granulométrique qui conduisent, par frittage, à un produit réfractaire conservant sensiblement ses propriétés, et en particulier une bonne résistance mécanique, dans une application où il subit des températures élevées, des cyclages thermiques et des conditions corrosives.

De façon surprenante, et contrairement à l'enseignement de EP 0 404 610, ce résultat est obtenu en dépit de la présence de plus de 1% de silice. Les inventeurs, sans être tenus par une quelconque théorie, expliquent ce phénomène par la composition particulière de fraction fine (fraction des particules présentant une taille inférieure à 50 microns) d'une poudre selon l'invention.

Une poudre selon l'invention peut encore comporter une ou plusieurs des caractéristiques optionnelles suivantes :

- La teneur massique en zircone $ZrO_2$ est supérieure à 87%, de préférence supérieure à 90%, de préférence supérieure à 92%.
- La fraction (a) des particules de zircone représente plus de 95% de la masse de la poudre.
- La fraction (a1) des particules d'agrégats de zircone représente plus de 65%, plus de 70% et/ou moins de 80%, voire moins de 75% de la masse de la poudre.
- La poudre comporte plus de 60% de particules de zircone présentant une taille inférieure à 7 mm, voire inférieure à 5 mm, et supérieure à 50 microns.
- La poudre comporte plus de 50% de particules de zircone présentant une taille inférieure à 5 mm et supérieure à 50 microns.
- Plus de 95% des particules d'agrégats de zircone, voire sensiblement toutes les particules d'agrégats de zircone comportent moins de 50% en masse de phase monoclinique.
- La zircone des particules d'agrégats de zircone qui comportent moins de 50% en masse de phase monoclinique est partiellement stabilisée ou totalement stabilisée à la magnésie (MgO) et/ou à la chaux (CaO). De préférence ladite zircone est stabilisée au moins en partie avec de la magnésie, la teneur massique en magnésie étant comprise entre 2,9 et 4,5%;
- Les particules d'agrégats de zircone sont des particules fondues.
- Les particules d'agrégats de zircone présentent une porosité totale inférieure à 5% en volume, de préférence inférieure à 2% en volume.
- La fraction (a2) représente plus de 20% et/ou moins de 30%, voire moins de 25% de la masse de la poudre.
- La poudre comporte plus de 10%, plus de 15%, voire plus de 20%, et/ou moins de 45%, moins de 40%, moins de 35%, voire moins de 25% de particules d'agrégats de zircone présentant une taille supérieure à 1 mm, et, de préférence inférieure à 7 mm, voire inférieure à 5 mm.
- La poudre comporte plus de 10%, plus de 11% et/ou moins de 17%, moins de 16%, voire moins de 15% de particules matricielles de zircone monoclinique.
- Les particules matricielles de zircone monoclinique sont constituées, pour plus de 99% de leur masse, de zircone.
- La fraction (b) des particules fines de silice représente plus de 1,1% et/ou moins de 1,7%, moins de 1,5%, voire moins de 1,4% de la masse de la poudre.
- Le diamètre médian des particules fines de silice est inférieur à 10 $\mu$m, de préférence inférieur à 5 $\mu$m, de préférence inférieur à 2 $\mu$m, de préférence encore inférieur à 1 $\mu$m.
- Les particules fines de silice sont issues d'une fumée de silice.
- La fraction (c) des particules additionnelles d'oxydes représente plus de 0,5%, plus de 1,0%, plus de 1,5% et/ou moins de 3,0%, moins de 2,5%, de préférence moins de 2%, voire moins de 1,0% de la masse de la poudre.
- Les particules additionnelles d'oxydes comportent des particules en $Y_2O_3$ ou, de préférence, des particules en $Y_2O_3$ et des particules en MgO;

- La poudre comporte plus de 0,2%, plus de 0,3%, voire plus de 0,4% et/ou moins de 0,8%, moins de 0,7%, voire moins de 0,6% de particules de $Y_2O_3$ et plus de 0,9%, plus de 1,0%, voire plus de 1,1% et/ou moins de 1,5%, moins de 1,4%, voire moins de 1,3% de particules de MgO.
- Dans les particules additionnelles d'oxydes, un ou plusieurs des oxydes CaO, MgO et $Y_2O_3$ est remplacé, partiellement ou totalement, par une quantité molaire équivalente d'un précurseur. De préférence cependant, lesdits oxydes sont présents sous la forme d'oxydes et non sous la forme de précurseurs.
- Plus de 95%, de préférence sensiblement 100% en masse des particules de CaO et des particules de $Y_2O_3$ présentent une taille inférieure à 50 $\mu$m, de préférence inférieure à 20 $\mu$m.

L'invention concerne également un produit fritté obtenu à partir d'une poudre selon l'invention.

Un tel produit peut en particulier être utilisé pour servir d'élément de garnissage, par exemple pour protéger une structure métallique d'un environnement corrosif, à des températures supérieures à 1800°C. Une telle utilisation, un tel élément de garnissage et une structure métallique protégée par un tel élément de garnissage sont décrits.

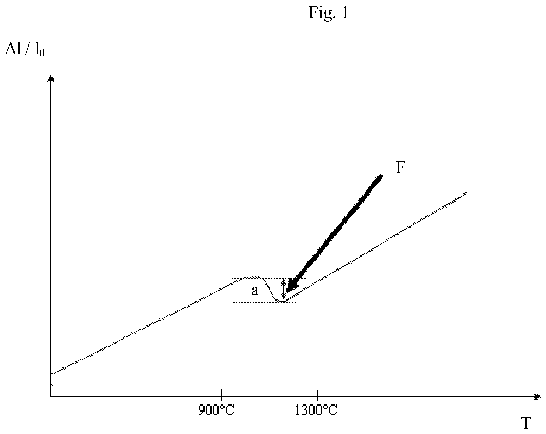

D'autres caractéristiques et avantages de la présente invention apparaîtront encore à la lecture de la description détaillée qui va suivre et à l'examen du dessin annexé dans lequel la figure 1 représente un exemple d'accident de dilatation.

## Définitions

On appelle "particules de zircone" et "particules de silice" des particules constituées, pour au moins 90%, de préférence pour au moins 95%, de préférence sensiblement 100%, de leur masse de zircone et de silice, respectivement.

Par « particules constituées d'un, deux ou trois oxydes choisis dans le groupe formé par CaO, MgO et $Y_2O_3$ », on entend un ensemble de particules dans lequel toutes les particules sont constituées dans le même oxyde, ou comportant des particules en un premier desdits oxydes et des particules en un deuxième desdits oxydes, ou comportant des particules en un premier desdits oxydes, des particules en un deuxième desdits oxydes et des particules en un troisième desdits oxydes. Il n'est pas envisagé qu'une particule puisse être constituée par un mélange de plusieurs desdits oxydes. Par « constitué dans un oxyde » ou « en un oxyde », il y lieu de comprendre que la teneur massique dudit oxyde est supérieure à 90%, voire supérieure à 95%, ou même, de préférence, sensiblement de 100%.

On appelle « zircone » l'oxyde de zirconium $ZrO_2$ et les traces de $HfO_2$, chimiquement indissociable du $ZrO_2$, toujours naturellement présent dans les sources de $ZrO_2$. Ces traces de $HfO_2$ représentent classiquement moins de 2% de la masse de la "zircone". Lorsqu'il est fait référence à $ZrO_2$ ou à $ZrO_2 + HfO_2$, il y a donc lieu de comprendre : $ZrO_2$+ traces de $HfO_2$. L'oxyde d'hafnium n'est pas considéré comme une impureté.

On appelle « zircone monoclinique », une zircone se présentant pour plus de 95% de sa masse sous la phase cristallographique monoclinique. Le dosage de phase cristallographique monoclinique s'effectue par diffraction en rayons X. Les zircones monocliniques utilisées peuvent être de toutes origines, par exemple chimiques, ou électrofondues.

On appelle « zircone partiellement stabilisée et/ou stabilisée », une zircone présentant moins de 50% de sa masse sous la phase cristallographique monoclinique. Les autres phases cristallographiques en présence sont la phase cubique et la phase quadratique.

Par « matricielle », on désigne une particule fine qui, lors d'un frittage, va constituer une matrice, généralement continue, entourant les particules grossières, ou « particules d'agrégat ».

Un produit est classiquement dit « fondu » lorsqu'il est obtenu par un procédé mettant en oeuvre une fusion de matières premières et une solidification par refroidissement.

Un précurseur de CaO, MgO ou $Y_2O_3$ est un composé capable, lors d'un frittage d'une préforme obtenue à partir d'une poudre selon l'invention, de conduire aux oxydes CaO, MgO ou $Y_2O_3$, respectivement. Par exemple, un précurseur de la chaux CaO est le carbonate de calcium. Ainsi, lorsque, dans les particules additionnelles d'oxydes, un ou plusieurs des oxydes CaO, MgO et $Y_2O_3$ est remplacé, partiellement ou totalement, par une quantité molaire équivalente d'un précurseur, ce remplacement ne modifie pas les quantités desdits oxydes dans le produit fritté obtenu par frittage d'une poudre selon l'invention. Un précurseur d'un oxyde est apporté en une "quantité molaire équivalente" à une quantité dudit oxyde lorsque le frittage de ladite quantité molaire équivalente dudit précurseur conduit à ladite quantité d'oxyde.

Par « taille d'un grain », on entend la taille d'une particule donnée classiquement par une caractérisation de distribution granulométrique réalisée avec un granulomètre laser. Le granulomètre laser utilisé ici est un Partica LA-950 de la société HORIBA.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de sodium et autres alcalins, fer, vanadium et chrome sont des impuretés si leur présence n'est pas désirée.

Sauf indication contraire, tous les pourcentages sont des pourcentages massiques.

**Description d'un mode de réalisation détaillé de l'invention**

Une poudre selon l'invention est destinée à être frittée pour constituer un produit fritté.

Elle comporte une fraction grossière, comportant notamment la fraction (a1), et une fraction fine comportant notamment les fractions (a2)+(b)+(c).

La fraction grossière, ou "agrégats", est constituée de particules d'agrégats qui seront, pour la plupart, sensiblement conservées lors du frittage pour constituer les "gros grains" du produit fritté. Selon l'invention, la fraction est constituée de particules de zircone afin de conférer au produit fritté une résistance mécanique élevée à très hautes températures. Selon l'invention, cette fraction grossière devrait représenter plus de 60% de la poudre.

Pour améliorer la résistance aux chocs thermiques, les inventeurs considèrent qu'il avantageux que plus de 5%, de préférence plus de 10%, voire plus de 15%, voire plus de 20% en masse des particules soient des particules d'agrégats de zircone présentant une taille supérieure à 1 mm et, de préférence, inférieure à 7 mm, voire inférieure à 5 mm.

De préférence, 95%, voire sensiblement 100% de la zircone de la fraction grossière est au moins en partie stabilisée, de préférence à la magnésie (MgO) et/ou à la chaux (CaO). Avantageusement, sur un produit obtenu par mise en forme et frittage d'une poudre selon l'invention, les accidents de dilatation thermique sont réduits.

De préférence, la porosité totale des particules de la fraction grossière est inférieure à 5%, de préférence inférieure à 2%. Avantageusement, ces particules sont plus stables thermiquement. Ainsi elles présentent une probabilité plus faible de subir un retrait irréversible lors de l'utilisation. En outre elles sont ainsi plus résistantes à la corrosion, car elles présentent moins de surface exposée aux espèces agressives.

De préférence toujours, les particules d'agrégats sont des particules fondues. Avantageusement, cette technique de fabrication permet d'obtenir des particules présentant le niveau de porosité préféré.

La fraction fine est constituée de particules qui seront, pour la plupart, transformées lors du frittage en une matrice liant lesdits gros grains. La fraction fine d'une poudre selon l'invention présente une composition particulière : La fraction fine doit comporter des particules matricielles de zircone représentant plus de 15% de la masse de la poudre. Cette teneur en zircone contribue, avec la fraction grossière, à conférer au produit fritté une résistance mécanique élevée à très hautes températures. Suivant l'enseignement de EP 0 404 610, une partie au moins des particules matricielles de zircone doit être constituée de particules matricielles de zircone monoclinique afin de conférer au produit fritté une bonne résistance aux chocs thermiques. Plus précisément, la poudre doit comporter de 8 à 20% de particules matricielles de zircone monoclinique. Cette condition est une condition supplémentaire à la condition selon laquelle plus de 15% de la poudre est constituée de particules matricielles de zircone et doit être bien entendu compatible avec cette dernière condition.

A l'encontre de l'enseignement du document EP 0 404 610 et d'un préjugé selon lequel un ajout de silice conduit systématiquement à limiter, voire supprimer l'effet bénéfique de l'introduction de particules matricielles de zircone monoclinique sur la résistance aux chocs thermiques, une poudre selon l'invention comporte également de 1 à 2% de particules fines de silice (b) et de 0,3% à 5% de particules additionnelles d'oxydes (c). Les fractions (b) et (c) améliorent le frittage, confèrent au produit fritté une bonne résistance mécanique, notamment une bonne résistance à la compression à froid et un bon module de rupture.

Les meilleurs résultats ont été obtenus avec l'ajout, comme particules additionnelles d'oxydes, de particules d'$Y_2O_3$ et de particules de MgO.

La fraction (d) constituant le complément à 100% d'une poudre selon l'invention n'est pas limitative. Les inventeurs considèrent en effet que la quantité de fraction (d) est suffisamment faible pour que, quelle que soit la distribution granulométrique ou la nature chimique de cette fraction, elle ne supprime pas les résultats avantageux obtenus. De préférence cependant, cette fraction est constituée par les impuretés des matières premières, comme $Al_2O_3$, $TiO_2$, $Fe_2O_3$, $Na_2O$, $K_2O$.

Le zircon fait également partie des « autres oxydes ».

L'invention concerne également un procédé de préparation d'une poudre selon l'invention comportant les étapes suivantes :

a) sélection d'une « source de particules d'agrégats de zircone » comportant au moins 30% en masse de particules d'agrégats de zircone, au moins 90% en masse desdites particules d'agrégats de zircone contenant moins de 50% en masse de phase monoclinique ;

b) sélection d'une « source de particules matricielles de zircone » comportant au moins 50% en masse de particules matricielles de zircone,

c) sélection d'une « source de particules matricielles de zircone monoclinique » comportant plus de 50% en masse de particules matricielles de zircone monoclinique ;

d) sélection d'une « source de particules fines de silice » comportant au moins 87%, de préférence au moins 90% en masse de particules fines de silice ;

e) sélection d'une source de particules additionnelles d'oxydes comportant au moins 87%, de préférence au moins 90% en masse de particules additionnelles d'oxydes ;

les sources sélectionnées aux étapes a), b) et c) comportant chacune au moins 87%, de préférence au moins 90% en masse de zircone, et

f) préparation d'une poudre comportant, en pourcentages en masse :

- au moins 60% de ladite source de particules d'agrégats de zircone, la quantité de ladite source de particules d'agrégats de zircone étant en outre déterminée de manière que ladite poudre comporte plus de 5% en masse de particules d'agrégats de zircone présentant une taille supérieure à 1 mm et, de préférence inférieure à 7 mm, voire inférieure à 5 mm, et;
- entre 8 et 31% de ladite source de particules matricielles de zircone monoclinique ;
- 1% à 2% de ladite source de particules fines de silice ;
- 0,3% à 5% de ladite source de particules additionnelles d'oxydes ;
- le complément à 100% étant ladite source de particules matricielles de zircone.

Les sources peuvent être choisies de manière à préparer une poudre présentant encore une ou plusieurs des caractéristiques d'une poudre selon l'invention.

L'invention concerne également une poudre préparée suivant un procédé selon l'invention.

Par « sélection d'une source », on entend « sélection d'une ou plusieurs sources ».

Bien entendu, les étapes a) à e) peuvent être en partie ou regroupées, par exemple s'il existe une source de matières premières correspondant à une ou plusieurs desdites sources. Dans un mode de réalisation, les sources, et en particulier les sources b) et c) sont différentes.

A l'étape f), le choix de la source de particules d'agrégats de zircone et la quantité de cette source sont adaptées de manière que la poudre préparée comporte plus de 5% en masse de particules d'agrégats de zircone présentant une taille supérieure à 1 mm et, de préférence, inférieure à 7 mm, voire inférieure à 5 mm. Par exemple, si cette source est principalement constituée de telles particules d'agrégats, sa quantité pourra être proche ou égale à 60%. En revanche, cette quantité devra être supérieure à 60% si ladite source ne comporte qu'une faible quantité de telles particules d'agrégats.

Les sources citées ci-dessus peuvent encore comporter une ou plusieurs des caractéristiques optionnelles suivantes :

- La source de particules d'agrégats de zircone est une source de zircone au moins en partie, voire totalement stabilisée à la magnésie (MgO) et/ou à la chaux (CaO). De préférence lesdits agrégats de zircone sont partiellement stabilisés avec une teneur massique en magnésie comprise entre 2,9 et 4,5% ;
- A l'étape f), on ajoute au moins 65%, de préférence au moins 70% de ladite source de particules d'agrégats de zircone ;
- A l'étape f), la quantité de ladite source de particules d'agrégats de zircone est déterminée de manière que ladite poudre comporte plus de 10%, voire plus de 15%, voire plus de 20%, voire plus de 30% en masse de particules d'agrégats de zircone présentant une taille supérieure à 1 mm et, de préférence, inférieure à 7 mm, voire inférieure à 5 mm ;
- La source de particules d'agrégats de zircone présente une teneur en zircone, en masse, supérieure à 94% ;
- La source de particules d'agrégats de zircone est une source de zircone fondue ;
- La source de particules d'agrégats de zircone est sélectionnée de manière à ce que les particules d'agrégats présentent une porosité totale inférieure à 5% en volume, de préférence inférieure à 2% en volume ;
- La source de particules matricielles de zircone monoclinique est constituée pour plus de 99% en masse de zircone ;
- A l'étape f), on ajoute au moins 11% de ladite source de particules matricielles de zircone monoclinique ;
- A l'étape f), on ajoute au moins 5% de la source de particules matricielle de zircone ;
- La source de particules matricielles de zircone monoclinique est une source dont au moins 90% des particules en masse présentent une taille inférieure à 15 $\mu$m. De préférence, à l'étape f), on ajoute entre 4 et 10% en masse de ladite source de particules matricielles de zircone monoclinique dont au moins 90% en masse des particules présentent une taille inférieure à 15 $\mu$m ;
- La source de particules matricielles de zircone est une source de zircone partiellement stabilisée, voire stabilisée. De préférence, lesdites particules matricielles de zircone sont partiellement stabilisées, la teneur massique en magnésie étant comprise entre 2,9% et 4,5% ;
- La source de particules additionnelles d'oxydes est sélectionnée de manière à ce que plus de 95%, de préférence sensiblement 100% en masse desdites particules additionnelles d'oxydes présentent une taille inférieure à 50 $\mu$m, de préférence inférieure à 20 $\mu$m ;

- Lors de la préparation de la poudre, la quantité de source de particules additionnelles d'oxydes utilisée est supérieure à 0,5%, de préférence supérieure à 1%, et/ou inférieure à 3%, de préférence inférieure à 2% ;
- La source de particules additionnelles d'oxydes est une source de $Y_2O_3$ ou, de préférence, une source de $Y_2O_3$ et de MgO ;
- A l'étape f), on ajoute plus de 0,2% et moins de 0,8% de la source de $Y_2O_3$ et plus de 0,9% et moins de 1,5% de la source de MgO ; De préférence, on ajoute 0,5% de la source de $Y_2O_3$ et 1,2% de la source de MgO ;
- Une source de particules additionnelles d'oxydes est une source de précurseurs desdits oxydes. De préférence cependant, la source de particules additionnelles d'oxydes est une source d'oxydes ;
- Au plus 1,5% de la source de particules fines de silice sont introduits lors de la préparation de la poudre ;
- Ladite source de particules fines de silice est une fumée de silice.

Il est décrit un mélange particulaire comportant de 0 à 6% en masse d'un additif de mise en forme et, comme complément à 100%, d'une poudre selon l'invention.

Cet additif peut en particulier être choisi dans le groupe constitué par :

- les argiles ;
- les plastifiants, comme le PEG ou le PVA ;
- les liants dont liants temporaires organiques tels que des résines, les lignosulfonates, la carboxyméthylcellulose ou la dextrine ;
- les défloculants, tels que des polyphosphates de métaux alcalins, des polyacrylates de métaux alcalins; et
- les mélanges de ces produits.

De préférence, cet additif est un lignosulfonate de calcium.

Il est décrit aussi un procédé de fabrication d'un produit réfractaire fritté, comportant les étapes successives suivantes :

A) préparation d'un mélange particulaire tel que décrit avec de l'eau pour former une charge de départ,
B) mise en forme de ladite charge de départ de manière à former une préforme;
C) frittage de ladite préforme.

A l'étape A), la quantité d'eau est fonction du procédé utilisé à l'étape B). Dans le cas d'une mise en forme par pressage à froid, un ajout d'une quantité d'eau comprise entre 1,5% et 2,5%, en pourcentage massique sur la base de la poudre (c'est-à-dire sur la base du mélange particulaire sans les additifs) est préférée.

Dans un mode de réalisation, aucun tensio actif n'est ajouté pour former la charge de départ.

A l'étape C), les conditions de frittage et en particulier la température de frittage, dépendent de la composition exacte de la fraction fine (constituée des particules fines) du mélange particulaire. Habituellement, une température de frittage comprise entre 1500°C et 1900°C, de préférence de 1700°C est bien adaptée.

L'invention concerne aussi un produit réfractaire fritté obtenu par frittage d'une préforme obtenue à partir d'une poudre selon l'invention, d'une poudre fabriquée suivant un procédé selon l'invention ou d'un mélange particulaire tel que décrit, en particulier suivant les étapes A) à C) ci-dessous.

Ce procédé permet avantageusement, de fabriquer un produit réfractaire fritté selon l'invention présentant une densité apparente comprise entre 4,1 et 4,9 g/cm$^3$, de préférence comprise entre 4,4 et 4,9 g/cm$^3$.

Dans le produit réfractaire fritté issu de l'étape C), les particules additionnelles d'oxydes peuvent notamment se combiner entre elles et/ou aux particules fines de silice, notamment sous la forme de silicates, comme par exemple de silicate d'yttrium.

Un produit fritté selon l'invention peut être utilisé sous la forme de blocs ou d'une couche, par exemple sous la forme d'un garnissage appliqué, par tout procédé connu, sur une paroi à protéger. Le frittage peut être effectué *in situ,* c'est-à-dire après que le produit ait été disposé dans sa position de service.

Dans un mode de réalisation, toutes les dimensions extérieures d'un bloc selon l'invention sont supérieures à 1 cm, supérieures à 2 cm, supérieures à 5 cm, voire supérieures à 10 cm.

L'invention concerne en particulier une installation comportant :

- une paroi et une barrière protégeant ladite paroi ; et/ou
- des moyens pour diriger un écoulement d'un liquide, par exemple une buse, ou pour entraver un tel écoulement, par exemple une plaque à tiroir,

ladite barrière ou lesdits moyens pour diriger ou entraver ledit écoulement comportant un produit réfractaire selon l'invention.

Le liquide peut être notamment un métal en fusion, par exemple l'acier

Dans un mode de réalisation, le liquide est à une température supérieure à 1400°C, voire supérieure à 1500°C, voire supérieure à 1600°C.

Le produit réfractaire selon l'invention peut notamment être disposé en contact avec un environnement susceptible d'être corrosif et/ou de créer un choc thermique, en particulier tel que la température varie, pendant le choc thermique, d'au moins 750°C en moins de 1 minute, voire d'au moins 1000°C en moins d'une minute, voire d'au moins 1500°C en moins d'une minute. Le choc thermique peut être ascendant, c'est-à-dire tel que l'origine du choc thermique est une élévation de la température. Le choc thermique peut également descendant, c'est-à-dire tel que l'origine du choc thermique est une diminution de la température.

L'invention concerne en particulier une installation choisie parmi une cuve à corium, notamment pour un réacteur à eau pressurisée, un réacteur pour fabriquer du noir de carbone (« Carbon Black » en anglais), en particulier une chambre de combustion d'un tel réacteur, un équipement de l'industrie métallurgique, comme un four de fusion, une poche de transfert, une poche de traitement, un dispositif de coulée, en particulier une plaque à tiroir, ou une buse d'un tel équipement, une chaudière d'incinération, un four de verrerie, un réacteur pétrochimique et un four cimentaire.

## Exemples

Les exemples non limitatifs suivants sont donnés dans le but d'illustrer l'invention.

## Caractérisations

### Mesure de résistance au choc thermique

La perte relative de résistance à la flexion suite à un choc thermique est une caractéristique d'un produit qui permet d'en évaluer la capacité à subir un tel choc.

L'essai normalisé PRE III.26/PRE/R.5.1/78 a été utilisé pour déterminer le comportement aux chocs thermiques par la perte relative de résistance à la flexion (% Perte MOR) après un ou plusieurs cycles consistant chacun à chauffer l'éprouvette d'essai de la température ambiante jusqu'à une température de 1200°C, à maintenir l'éprouvette à cette température T pendant 30 minutes, puis à plonger l'éprouvette dans de l'eau froide.

Les éprouvettes sont des barreaux de 125 x 25 x 25 $mm^3$ ne comportant aucune face de peau.

La résistance à la flexion a été mesurée suivant la norme ISO 5014. Pour une composition donnée, la mesure de la résistance à la flexion initiale des éprouvettes (non soumises à un choc thermique), « MOR initial » est la valeur moyenne mesurée sur 3 éprouvettes identiques ; la mesure de la résistance après choc thermique à 1200°C, « MOR après CT » est la valeur moyenne de la résistance à la flexion mesurée à température ambiante sur les 3 éprouvettes après qu'elles ont subi ledit choc thermique ; la mesure de la perte relative de résistance à la flexion, «% Perte MOR» est donnée par la formule suivante :

$$\% \text{ Perte MOR} = 100.(\text{MOR après CT} - \text{MOR initial}) / (\text{MOR initial})$$

### Mesure de l'amplitude de l'accident de dilatation

Les mesures des coefficients de dilatation thermique ont été réalisées sur des échantillons cylindriques présentant un diamètre de 12 mm et une hauteur de 15 mm. Chaque mesure a été effectuée à l'aide d'un dilatomètre SETSYS Evolution TMA 16/18 avec équipage en alumine, commercialisé par la société SETARAM. La mesure de dilatation est effectuée à l'aide d'un palpeur hémisphérique appliquant une charge de 5 g. La vitesse de montée en température est de 4°C/min, jusqu'à une température de 1600°C. La température est ensuite diminuée à une vitesse de 4 °C/min. Le cycle est entièrement réalisé sous un débit d'air de 20 ml/min.

Sur la courbe de dilatation thermique, on constate, comme représentée sur la figure 1, la présence d'un « accident de dilatation ». L'amplitude « a » de cet accident est la différence entre le maximum avant la rétraction et le minimum avant la reprise d'expansion, mesurée entre 900°C et 1300°C, sur la partie de la courbe de dilatation correspondant à la montée en température. Sur la figure 1, la température T en °C est en abscisse, l'expansion thermique $\Delta l / l_0$ en % est en ordonnée. L'accident de dilatation est repéré par la flèche F.

### Mesure de la densité apparente après frittage

Les mesures des densités apparentes après frittage ont été réalisées sur des échantillons de dimensions 125 x 25 x 25 $mm^3$, selon la norme ISO 5017.

**Mesure de la porosité des agrégats**

La densité apparente Dap des particules d'agrégats a été déterminée selon la norme ISO 8840 de 1987 avec la modification suivante : les particules utilisées présentent une taille comprise entre 2 et 5 mm.

La densité absolue Dab a été mesurée suivant la procédure de l'Accupic 1330 commercialisé par la société Micromeritics, sur un produit broyé à une taille inférieure à 160 microns.

La porosité totale des particules, Po, est calculée à l'aide de la formule suivante :

$$Po = (Dab - Dap)/Dab$$

Les matières premières suivantes ont été utilisées dans les exemples :

- La poudre de zircone monoclinique utilisée dans la matrice est de la zircone « Z-99 3-5 $\mu$m », commercialisée par la société Unitec Ceramics, qui présente une teneur massique en $ZrO_2$ + $HfO_2$ supérieure à 98,3%, et un diamètre médian compris entre 3 et 5 microns ;
- La fumée de silice utilisée dans la matrice est de la silice thermique constituée essentiellement de microsphères de silice vitreuse dont les particules sont à 90% inférieures à 4 $\mu$m, le diamètre médian des particules étant typiquement de 0,5 $\mu$m. Elle présente une surface spécifique typique B.E.T. de 14 $m^2$/g, une teneur massique typique en silice de 93,5%, une teneur typique en $Al_2O_3$ de 3,5% et une teneur typique en $ZrO_2$ + $HfO_2$ de 2,4% ;
- Les particules de zircone partiellement stabilisée à la magnésie sont des particules de « fused magnesia stabilised zirconia » commercialisés par la société Unitec Ceramics, qui présentent une teneur massique en $ZrO_2$ + $HfO_2$ supérieure à 94,3% et une teneur massique en MgO comprise entre 2,9 et 4,4% ;
- Les particules de zircone partiellement stabilisée à la chaux sont des particules de « fused calcia stabilised zirconia », commercialisés par la société Unitec Ceramics, qui présentent une teneur massique en $ZrO_2$ + $HfO_2$ supérieure à 93,9% et une teneur massique en CaO comprise entre 3,7% et 4,8% ;
- La poudre de zircone monoclinique -300 Mesh utilisée est une poudre de « zircone Z-99 » commercialisée par la société Unitec Ceramics, dont la teneur massique en $ZrO_2$ + $HfO_2$ est supérieure à 98,3%, et dont au moins 92% des particules présentent une taille inférieure à 50 microns.
- La poudre de CaO utilisée dans la matrice est une poudre de chaux éteinte, commercialisée par la société La Gloriette, contenant plus de 97% de CaO, (quantité mesurée après avoir effectuée une perte au feu à 1000°C) et dont les particules présentent une taille inférieure à 50 $\mu$m.
- La poudre de MgO utilisée dans la matrice est une poudre de « MagChem® P98 Pulverised», commercialisée par la société M.A.F. Magnesite B.V., contenant plus de 97,5% de magnésie et dont au moins 60% des particules présentent une taille inférieure à 44 microns ;
- La poudre de $Y_2O_3$ utilisée dans la matrice est une poudre de « yttrium oxide » commercialisée par la société Treibacher, contenant plus de 98,9% d'oxyde d'yttrium et dont le diamètre médian est inférieur à 10 microns ;
- L'argile utilisé est de l'argile RR40 ;
- Le lignosulfonate de calcium utilisé est du WAFEX 122, commercialisé par la société Holmen LignoTech.

Les poudres d'oxydes sont mélangées avec un additif de mise en forme (1% d'argile RR40 pour les exemples 1 à 4 ou 0,5% de lignosulfonate de calcium pour les autres exemples) et 2% d'eau, en pourcentages sur la base du mélange des poudres d'oxydes. Le mélange humide est alors pressé sous la forme de briques de dimensions 230 x 114 x 64 $mm^3$ sur une presse mécanique simple effet à une pression de 720 kg/$cm^2$.

Ces briques ont ensuite été frittées à une température de palier de 1700°C, le temps de maintien en palier étant de 5 heures, la vitesse de montée étant de 50°C/h. Après le palier de température, la température a été diminuée, la vitesse de descente étant de 50°C/h jusqu'à 800°C, la descente en température étant libre ensuite jusqu'à la température ambiante.

Les tableaux suivants résument les essais et les résultats obtenus.

Tableau 1

| | Granulométrie (*) | Ex 1 | Ex 2 | Ex 3 | Ex 4 | Ex 5 | Ex 6 | Ex 7 | Ex 8 | Ex 9 | Ex 10 | Ex 11 | Ex 12 | Ex 13 | Ex 14 | Ex 15 | Ex 16 |
|---|---|---|---|---|---|---|---|---|---|---|---|---|---|---|---|---|---|
| Zircone partiellement stabilisée à CaO | 1,68 - 4 mm | 0 | 48 | 49 | - | - | - | - | - | - | - | - | - | - | - | - | - |
| | 0,59 - 1,68 mm | 35 | 8 | 8 | - | - | - | - | - | - | - | - | - | 52 | - | - | - |
| | 0,149 - 0,59 mm | 30 | 17 | 17 | - | - | - | - | - | - | - | - | - | 10 | - | - | - |
| | < 0,149 mm | 20 | - | - | - | - | - | - | - | - | - | - | - | - | - | - | - |
| | < 0,05 mm | 15 | 17 | 19 | - | - | - | - | - | - | - | - | - | 10 | - | - | - |
| Zircone partiellement stabilisée à MgO | 1,68 - 4 mm | - | - | - | 36 | 36 | 36 | 36 | 36 | 36 | 36 | 38 | 18 | - | 55 | 55 | 55 |
| | 0,59 - 1,68 mm | - | - | - | 9 | 9 | 9 | 9 | 9 | 9 | 9 | 9 | 29 | - | 10 | 10 | 10 |
| | 0,149 - 0,59 mm | - | - | - | 26 | 26 | 26 | 26 | 26 | 26 | 26 | 27 | 27 | - | 17,8 | 17,8 | 17,8 |
| | < 0,149 mm | - | - | - | - | - | - | - | - | - | - | - | - | - | 5 | - | - |
| | < 0,05 mm | - | - | - | 5 | 5 | 5 | 5 | 5 | 5 | 5 | 5 | 5 | - | - | 5 | - |
| Zircone monoclinique | < 0,05 mm | 0 | 5 | 5 | 17,8 | 17,3 | 16,6 | 17,3 | 12,8 | 12,8 | 12,8 | 13,1 | 13,1 | 15,6 | 9,3 | 9,3 | 9,3 |
| Zircone monoclinique | 3,5-5 µm | 0 | 0 | 2 | 5 | 5 | 5 | 5 | 5 | 5 | 5 | 5 | 5 | 9 | - | - | 5 |
| Poudre d'$Y_2O_3$ (%) | | 0 | 5 | 0 | 0 | 0,5 | 0 | 0 | 5 | 0 | 0 | 0,5 | 0,5 | 0,5 | 0,5 | 0,5 | 0,5 |
| Poudre de MgO (%) | | 0 | 0 | 0 | 0 | 0 | 1,2 | 0 | 0 | 5 | 0 | 1,2 | 1,2 | 0 | 1,2 | 1,2 | 1,2 |
| Poudre de CaO (%) | | 0 | 0 | 0 | 0 | 0 | 0 | 0,5 | 0 | 0 | 5 | 0 | 0 | 1,2 | 0 | 0 | 0 |
| Fumée de silice | | 0 | 0 | 0 | 1,2 | 1,2 | 1,2 | 1,2 | 1,2 | 1,2 | 1,2 | 1,2 | 1,2 | 1,7 | 1,2 | 1,2 | 1,2 |
| Total | | 100 | 100 | 100 | 100 | 100 | 100 | 100 | 100 | 100 | 100 | 100 | 100 | 100 | 100 | 100 | 100 |

(*) tel qu'indiqué, en Mesh ou en mm, sur le conditionnement de la matière première considérée

Tableau 2

| | Ex 1 | Ex2 | Ex 3 | Ex 4 | Ex 5 | Ex 6 | Ex 7 | Ex 8 | Ex 9 | Ex 10 | Ex 11 | Ex 12 | Ex 13 | Ex 14 | Ex 15 | Ex 16 |
|---|---|---|---|---|---|---|---|---|---|---|---|---|---|---|---|---|
| Particules de zircone (a) (%) | 100 | 95 | 100 | 98,8 | 98,3 | 97,6 | 98,3 | 93,8 | 93,8 | 93,8 | 97,1 | 97,1 | 96,6 | 97,1 | 97,1 | 97,1 |
| Particules d'agrégats de zircone (a1) (%) | 69 | 73 | 74 | 71 | 71 | 71 | 71 | 71 | 71 | 71 | 74 | 74 | 62 | 68,6 | 68,6 | 68,6 |
| Particules d'agrégats de zircone présentant une taille inférieure à 7 mm et supérieure à 1 mm (%) | 3.5 | 47,8 | 48,8 | 36,2 | 36,2 | 36,2 | 36,2 | 36.2 | 36,2 | 36,2 | 38,1 | 20,5 | 5,2 | 5,5 | 5,2 | 5,2 |
| Particules matricielles de zircone (a2) (%) | 31 | 22 | 26 | 27,8 | 27,3 | 26,6 | 27,3 | 22,8 | 22,8 | 22,8 | 23,1 | 23,1 | 34,6 | 28,5 | 28,5 | 28,5 |
| Particules matricielles de zircone monoclinique (%) | 0 | 3 | 5 | 15,7 | 15,4 | 15 | 15,4 | 12,7 | 12,7 | 12,7 | 12,9 | 12,9 | 18,4 | 5,6 | 9,3 | 10,6 |
| Particules fines de silice (b) (%) | - | - | - | 1,2 | 1,2 | 1,2 | 1,2 | 1,2 | 1,2 | 1,2 | 1,2 | 1,2 | 1,7 | 1,2 | 1,2 | 1,2 |
| Particules additionnelles d'oxydes (c) (%) | - | 5 | - | - | 0,5 | 1,2 | 0,5 | 5 | 5 | 5 | 1,7 | 1,7 | 1,7 | 1,7 | 1,7 | 1,7 |
| Analyse chimique après frittage à 1700°C | | | | | | | | | | | | | | | | |
| ZrO$_2$ +HfO$_2$ (%) | 95,1 | 90,7 | 95,6 | 95 | 94,5 | 93,8 | 94,5 | 90 | 90,1 | 90,2 | 93,2 | 93,1 | 93,1 | 92,6 | 92,3 | 92,8 |
| (%) | 4 | 3,5 | 3,6 | 0,1 | 0,1 | 0,1 | 0,6 | 0,1 | 0,15 | 5 | 0,1 | 0,1 | 4 | 0,1 | 0,1 | 0,1 |
| MgO(%) | <0,1 | <0,1 | <0,1 | 3,1 | 3,1 | 4,3 | 3,1 | 3,1 | 8 | 3,1 | 4,4 | 4,3 | <0,1 | 4,7 | 4,7 | 4,5 |
| Y$_2$O$_3$ (%) | < 0,1 | 5 | < 0,1 | <0,1 | 0,5 | < 0,1 | < 0,1 | 5 | < 0,1 | < 0,1 | 0,5 | 0,5 | 0,5 | 0,5 | 0,5 | 0,5 |
| S iO$_2$ (%) | 0,21 | 0,18 | 0,19 | 1,21 | 1,2 | 1,22 | 1,2 | 1,2 | 1,24 | 1,2 | 1,21 | 1,22 | 1,75 | 1,24 | 1,25 | 1,24 |
| Al$_2$O$_3$ (%) | 0,21 | 0,17 | 0,18 | 0,23 | 0,22 | 0,24 | 0,23 | 0,22 | 0,22 | 0,22 | 0,23 | 0,22 | 0,25 | 0,23 | 0,24 | 0,23 |
| Autres (%) | <0,4 | <0,4 | <0,5 | <0,5 | 0,5 | <0,5 | <0,5 | 0,5 | <0,4 | 4,5 | <0,5 | <0,6 | <0,4 | 0,7 | <0,7 | <0,7 |
| Résultats | | | | | | | | | | | | | | | | |
| Densité apparente (g/cm$^3$) | 4,56 | 4,64 | 4,74 | 4,57 | 4,63 | 4,72 | 4,62 | 4,46 | 4,49 | 4,26 | 4,71 | 4,62 | 4,65 | 4,63 | 4,71 | 4,67 |
| Module de rupture en flexion 3 points à 20°C (MPa) | 11 | 15 | 4 | 10 | 13 | 20 | 13 | 8 | 9 | 8 | 17,6 | 16 | 7 | 13 | 12,4 | 10 |

(suite)

| Résultats | | | | | | | | | | | | | | | |
|---|---|---|---|---|---|---|---|---|---|---|---|---|---|---|---|
| % Perte MOR avant/après chocs thermiques à 1200°C (%) | 80 | 87 | 62 | 64 | 57 | 70 | 69 | 65 | 75 | 69 | 65 | 55 | 70 | 80 | 73 | 68 |
| « accident de dilatation »(%) | - | 0,00 | - | 10,251 | 0,20 | 0,20 | 0,05 | 0,10 | 0,06 | 0,00 | 0,04 | 0,02 | 0,06 | 0,01 | 0,02 | 0,03 |

On considère qu'un bon compromis entre module de rupture en flexion 3 points à 20°C, résistance aux chocs thermiques, et absence d'anomalie de dilatation est obtenu lorsque les trois critères suivants sont respectés :

(1) module de rupture en flexion 3 points à 20°C supérieur ou égal à 7 MPa, de préférence supérieur à 10 MPa ;
(2) perte MOR inférieure à 79%, de préférence inférieure à 70%, de préférence encore inférieure à 65% ;
(3) pourcentage d'accidents de dilatation inférieur à 0,22%, de préférence inférieur à 0,1%, de préférence encore inférieur à 0,05%.

Les exemples 1 à 4, et 14 sont des exemples comparatifs ne respectant pas simultanément ces trois critères.

Une comparaison des exemples 1 et 2 montre l'impact de l'introduction de particules additionnelles d'oxydes sur la résistance mécanique mesurée à 20°C, malgré la présence de 3% de particules matricielles de zircone monoclinique. Une comparaison des exemples 2 et 3 montre que, sans la présence de particules additionnelles d'oxyde et sans la présence de particules fines de silice, un ajout de 5% de particules matricielles de zircone monoclinique entraîne une dégradation de la résistance mécanique à 20°C et une amélioration de la résistance aux chocs thermiques.

L'exemple 14 montre qu'une introduction de 5,6% de particules matricielles de zircone monoclinique ne permet pas de respecter le critère (2). C'est pourquoi, l'invention préconise une teneur minimale en particules matricielles de zircone monoclinique de 8%.

L'exemple 13 montre que l'effet des particules matricielles de zircone monoclinique reste limité et qu'un ajout important peut même provoquer une dégradation de la résistance mécanique à 20°C, malgré une teneur en silice élevée. C'est pourquoi, l'invention préconise une teneur maximale en particules matricielles de zircone monoclinique de 20%. Au-delà de cette valeur, les inventeurs considèrent que le compromis susmentionné entre résistance mécanique à 20°C, résistance aux chocs thermiques et absence d'accidents de dilatation ne peut être atteint.

L'exemple 4 montre que, malgré la présence de 1,2% de fumée de silice, une introduction de 15,7% de particules matricielles de zircone monoclinique permet d'améliorer la résistance aux chocs thermiques, ce qui est contraire à l'enseignement de EP 0 404 610. Cependant, l'exemple 4 ne respecte pas le critère (3) portant sur les accidents de dilatation.

Les exemples 4 à 7 montrent l'intérêt des ajouts simultanés de particules additionnelles d'oxydes, de particules fines de silice et de plus de 8% de particules matricielles de zircone monoclinique.

Une comparaison des exemples 14 et 15 montre l'importance, pour améliorer la résistance aux chocs thermiques, d'introduire au moins 8% de particules matricielles de zircone monoclinique lorsque le produit comporte par ailleurs des particules de $Y_2O_3$, des particules de MgO et des particules fines de silice.

Une comparaison des exemples 5 à 7 montre l'effet remarquable d'un ajout de CaO sur la réduction de l'amplitude de l'accident de dilatation.

Une comparaison des exemples 5 et 6 montre l'effet remarquable d'un ajout de MgO sur l'amélioration de la résistance mécanique à 20°C.

Ces deux effets sont confirmés pour des teneurs en particules additionnelles d'oxydes jusqu'à 5%, comme le montrent les exemples 8 à 10.

Une comparaison des exemples 11 et 12 avec les exemples 5 et 6 montre un effet synergique très prononcé à un ajout simultané de particules de MgO et de particules d'$Y_2O_3$. Ainsi, dans les cas où un ajout de CaO n'est pas conseillé, il est possible de réduire la valeur de l'accident de dilatation avec des ajouts limités en particules additionnelles d'oxydes $Y_2O_3$ et MgO.

Pour bénéficier autant que possible des propriétés avantageuses de la zircone, la teneur en zircone doit être la plus élevée possible. C'est pourquoi la teneur en particules additionnelles d'oxydes est limitée, selon l'invention, à 5%. Une teneur minimale de 0,3% est cependant considérée comme indispensable pour que ces particules aient un effet sensible.

Les exemples 11 et 12, et en particulier l'exemple 12, sont préférés entre tous.

Comme cela apparaît clairement à présent, l'invention fournit une nouvelle poudre permettant de fabriquer un matériau présentant une bonne résistance mécanique, un comportement en dilatation thermique sans anomalie importante (ou pratiquement linéaire) et une bonne résistance aux chocs thermiques.

Bien entendu, la présente invention n'est pas limitée aux modes de réalisation décrits, fournis à titre illustratif.

**Revendications**

1. Poudre comportant plus de 85% de zircone, en pourcentage en masse, et constituée, pour un total de 100%, en pourcentages en masse sur la base des oxydes, de :

(a) plus de 92% de particules de zircone, la poudre comportant :

(a1) plus de 60% de particules de zircone présentant une taille supérieure à 50 microns, dites "particules d'agrégats de zircone", au moins 90% en masse desdites particules d'agrégats de zircone contenant moins de 50% en masse de phase monoclinique ;
(a2) plus de 15% de particules de zircone présentant une taille inférieure à 50 $\mu$m, dites « particules matricielles de zircone » ;

(b) 1 à 2% de particules de silice présentant une taille inférieure à 50 microns, dites "particules fines de silice";
(c) 0,3% à 5% de particules constituées d'un, deux ou trois oxydes choisis dans le groupe formé par CaO, MgO et $Y_2O_3$, dites "particules additionnelles d'oxydes", au moins 55% en masse desdites particules additionnelles présentant une taille inférieure à 50 $\mu$m ;
(d) moins de 1% de particules constituées « d'autres oxydes » ;

la poudre étant également telle qu'elle comporte :

- plus de 5% de particules d'agrégats de zircone présentant une taille supérieure à 1 mm, et
- de 8 à 20% de particules matricielles de zircone présentant une taille inférieure à 15 $\mu$m et comportant, pour plus de 95% de leur masse, une phase monoclinique, dites « particules matricielles de zircone monoclinique ».

2. Poudre selon la revendication précédente, dans laquelle plus de 95% en masse des particules de CaO et des particules de $Y_2O_3$ présentent une taille inférieure à 20 $\mu$m.

3. Poudre selon l'une quelconque des revendications précédentes, dans laquelle la teneur massique en zircone $ZrO_2$ est supérieure à 90%.

4. Poudre selon l'une quelconque des revendications précédentes, dans laquelle la zircone des particules d'agrégats de zircone qui comportent moins de 50% en masse de phase monoclinique est partiellement stabilisée ou totalement stabilisée à la magnésie MgO et/ou à la chaux CaO.

5. Poudre selon la revendication précédente, dans laquelle ladite zircone est stabilisée au moins en partie avec de la magnésie, la teneur massique en magnésie étant comprise entre 2,9 et 4,5%.

6. Poudre selon l'une quelconque des revendications précédentes, dans laquelle plus de 15% des particules d'agrégats de zircone présentent une taille supérieure à 1 mm, en pourcentage en masse sur la base de la poudre.

7. Poudre selon l'une quelconque des revendications précédentes, dans laquelle les particules d'agrégats de zircone sont des particules fondues.

8. Poudre selon l'une quelconque des revendications précédentes, dans laquelle les particules matricielles de zircone monoclinique représentent plus de 11% et moins de 16% de la masse de la poudre.

9. Poudre selon l'une quelconque des revendications précédentes, dans laquelle les particules additionnelles d'oxydes représentent plus de 1% et moins de 2% de la masse de la poudre.

10. Poudre selon l'une quelconque des revendications précédentes, dans laquelle les particules additionnelles d'oxydes comportent des particules en $Y_2O_3$ et des particules en MgO.

11. Poudre selon la revendication précédente, comportant plus de 0,2% et moins de 0,8% de particules de $Y_2O_3$, et plus de 0,9% et moins de 1,5% de particules de MgO.

12. Poudre selon l'une quelconque des revendications précédentes, comportant plus de 60% de particules de zircone présentant une taille inférieure à 7 mm, en pourcentage en masse sur la base des oxydes.

13. Procédé de préparation d'une poudre selon l'une quelconque des revendications précédentes comportant les étapes suivantes :

a) sélection d'une « source de particules d'agrégats de zircone » comportant au moins 30% en masse de particules de zircone présentant une taille supérieure à 50 microns, dites "particules d'agrégats de zircone", au moins 90% en masse desdites particules d'agrégats de zircone contenant moins de 50% en masse de phase monoclinique ;

b) sélection d'une « source de particules matricielles de zircone » comportant au moins 50% en masse de particules de zircone présentant une taille inférieure à 50 $\mu$m, dites « particules matricielles de zircone »,

c) sélection d'une « source de particules matricielles de zircone monoclinique » comportant plus de 50% en masse de particules matricielles de zircone présentant une taille inférieure à 15 $\mu$m et comportant, pour plus de 95% de leur masse, une phase monoclinique, dites « particules matricielles de zircone monoclinique » ;

d) sélection d'une « source de particules fines de silice » comportant au moins 87% en masse de particules de silice présentant une taille inférieure à 50 $\mu$m, dites "particules fines de silice";

e) sélection d'une « source de particules additionnelles d'oxydes » comportant au moins 87% en masse de particules constituées d'un, deux ou trois oxydes choisis dans le groupe formé par CaO, MgO et $Y_2O_3$, dites "particules additionnelles d'oxydes", au moins 55% en masse desdites particules additionnelles d'oxydes présentant une taille inférieure à 50 $\mu$m ;

les sources sélectionnées aux étape a), b) et c) comportant chacune au moins 87% en masse de zircone, et

f) préparation d'une poudre comportant, en pourcentages en masse :

- au moins 60% de ladite source de particules d'agrégats de zircone, la quantité de ladite source de particules d'agrégats de zircone étant en outre déterminée de manière que ladite poudre comporte plus de 5% en masse de particules d'agrégats de zircone présentant une taille supérieure à 1 mm et;
- entre 8 et 31% de ladite source de particules matricielles de zircone monoclinique ;
- 1% à 2% de ladite source de particules fines de silice ;
- 0,3% à 5% de ladite source de particules additionnelles d'oxydes ;
- le complément à 100% étant ladite source de particules matricielles de zircone.

**14.** Produit réfractaire fritté obtenu par frittage d'une préforme obtenue à partir d'une poudre selon l'une quelconque des revendications 1 à 12 ou fabriquée suivant un procédé selon la revendication précédente.

**15.** Installation comportant :

- une paroi et une barrière protégeant ladite paroi ; et/ou
- des moyens pour diriger un écoulement d'un liquide ou pour entraver un tel écoulement,

ladite barrière ou lesdits moyens pour diriger ou entraver ledit écoulement comportant un produit réfractaire selon la revendication précédente disposé en contact avec un environnement susceptible d'être corrosif et/ou de créer un choc thermique tel que la température varie d'au moins 750°C en moins de 1 minute.

**16.** Installation selon la revendication précédente, choisie parmi un réacteur pour fabriquer du noir de carbone, un équipement de l'industrie métallurgique, une chaudière d'incinération, un four de verrerie, un réacteur pétrochimique et un four cimentaire.

**Patentansprüche**

**1.** Pulver enthaltend mehr als 85 % an Zirkoniumoxid, in Prozentangabe in Masse, und gebildet, für eine Summe von 100 %, in Prozentangaben in Masse auf Basis der Oxide, aus:

(a) mehr als 92 % an Teilchen aus Zirkoniumoxid, wobei das Pulver enthält:

(a1) mehr als 60 % an Teilchen aus Zirkoniumoxid, welche eine Größe von größer als 50 Mikron aufweisen, genannt ,Zuschlagsteilchen aus Zirkoniumoxid', wobei mindestens 90 % in Masse der besagten Zuschlagsteilchen aus Zirkoniumoxid weniger als 50 % in Masse an monokliner Phase enthalten;

(a2) mehr als 15 % an Teilchen aus Zirkoniumoxid, welche eine Größe von geringer als 50 $\mu$m aufweisen, genannt "Matrixteilchen aus Zirkoniumoxid";

(b) 1 bis 2 % an Teilchen aus Siliziumoxid, welche eine Größe von geringer als 50 Mikron aufweisen, genannt ,Feinteilchen aus Siliziumoxid';

(c) 0,3 % bis 5 % an Teilchen gebildet aus einem, zwei oder drei Oxiden ausgewählt aus der Gruppe gebildet aus CaO, MgO und $Y_2O_3$, genannt ,Zusatzteilchen aus Oxiden', wobei mindestens 55 % in Masse der besagten Zusatzteilchen eine Größe von geringer als 50 $\mu$m aufweisen;

(d) weniger als 1 % an Teilchen gebildet "aus anderen Oxiden";

wobei das Pulver ebenfalls so ist, dass es enthält:

- Mehr als 5 % an Zuschlagsteilchen aus Zirkoniumoxid, welche eine Größe von größer als 1 mm aufweisen, und
- Von 8 bis 20 % an Matrixteilchen aus Zirkoniumoxid, welche eine Größe von geringer als 15 $\mu$m aufweisen und, zu mehr als 95 % ihrer Masse, eine monokline Phase enthalten, genannt "Matrixteilchen aus monoklinem Zirkoniumoxid".

2. Pulver nach dem vorhergehenden Anspruch, wobei mehr als 95 % in Masse der Teilchen aus CaO und der Teilchen aus $Y_2O_3$ eine Größe von geringer als 20 $\mu$m aufweisen.

3. Pulver nach irgend einem der vorhergehenden Ansprüche, wobei der Massen-Gehalt an Zirkoniumoxid $ZrO_2$ größer ist als 90 %.

4. Pulver nach irgend einem der vorhergehenden Ansprüche, wobei das Zirkoniumoxid der Zuschlagsteilchen aus Zirkoniumoxid, die weniger als 50 % in Masse an monokliner Phase enthalten, teilweise stabilisiert oder vollständig stabilisiert ist durch Magnesiumoxid MgO und/oder durch Kalk CaO.

5. Pulver nach dem vorhergehenden Anspruch, wobei das besagte Zirkoniumoxid zumindest zum Teil stabilisiert ist mit Magnesia, wobei der Massen-Gehalt an Magnesia zwischen 2,9 und 4,5 % ist.

6. Pulver nach irgend einem der vorhergehenden Ansprüche, wobei mehr als 15 % der Zuschlagsteilchen aus Zirkoniumoxid eine Größe von größer als 1 mm aufweisen, in Prozentangabe in Masse auf Basis des Pulvers.

7. Pulver nach irgend einem der vorhergehenden Ansprüche, wobei die Zuschlagsteilchen aus Zirkoniumoxid geschmolzene Teilchen sind.

8. Pulver nach irgend einem der vorhergehenden Ansprüche, wobei die Matrixteilchen aus monoklinem Zirkoniumoxid mehr als 11 % und weniger als 16 % der Masse des Pulvers darstellen.

9. Pulver nach irgend einem der vorhergehenden Ansprüche, wobei die Zusatzteilchen aus Oxid mehr als 1 % und weniger als 2 % der Masse des Pulvers darstellen.

10. Pulver nach irgend einem der vorhergehenden Ansprüche, wobei die Zusatzteilchen aus Oxid Teilchen aus $Y_2O_3$ und Teilchen aus MgO enthalten.

11. Pulver nach dem vorhergehenden Anspruch, enthaltend mehr als 0,2 % und weniger als 0,8 % an Teilchen aus $Y_2O_3$, und mehr als 0,9 % und weniger als 1,5 % an Teilchen aus MgO.

12. Pulver nach irgend einem der vorhergehenden Ansprüche, enthaltend mehr als 60 % an Teilchen aus Zirkoniumoxid, welche eine Größe von geringer als 7 mm aufweisen, in Prozentangabe in Masse auf Basis der Oxide.

13. Verfahren zur Herstellung eines Pulvers nach irgend einem der vorhergehenden Ansprüche enthaltend die folgenden Schritte:

a) Auswahl einer "Quelle für Zuschlagsteilchen aus Zirkoniumoxid" enthaltend mindestens 30 % in Masse an Teilchen aus Zirkoniumoxid, welche eine Größe von größer als 50 Mikron aufweisen, genannt 'Zuschlagsteilchen aus Zirkoniumoxid', wobei mindestens 90 % in Masse der besagten Zuschlagsteilchen aus Zirkoniumoxid weniger als 50 % in Masse an monokliner Phase enthalten;
b) Auswahl einer "Quelle für Matrixteilchen aus Zirkoniumoxid" enthaltend mindestens 50 % in Masse an Teilchen aus Zirkoniumoxid, welche eine Größe von geringer als 50 $\mu$m aufweisen, genannt "Matrixteilchen aus Zirkoniumoxid";
c) Auswahl einer "Quelle für Matrixteilchen aus monoklinem Zirkoniumoxid" enthaltend mindestens 50 % in Masse an Matrixteilchen aus Zirkoniumoxid, welche eine Größe von geringer als 15 $\mu$m aufweisen und, zu mehr als 95 % ihrer Masse, eine monokline Phase enthalten, genannt "Matrixteilchen aus monoklinem Zirkoniumoxid";
d) Auswahl einer "Quelle für Feinteilchen aus Siliziumoxid" enthaltend mindestens 87 % in Masse an Teilchen aus Siliziumoxid, welche eine Größe von geringer als 50 μm aufweisen, genannt ‚Feinteilchen aus Siliziumoxid';

e) Auswahl einer "Quelle für Zusatzteilchen aus Oxiden" enthaltend mindestens 87 % in Masse an Teilchen gebildet aus einem, zwei oder drei Oxiden ausgewählt aus der Gruppe gebildet aus CaO, MgO und Y$_2$O$_3$, genannt ‚Zusatzteilchen aus Oxiden', wobei mindestens 55 % in Masse der besagten Zusatzteilchen aus Oxiden eine Größe von geringer als 50 μm aufweisen;

wobei die in den Schritten a), b) und c) ausgewählten Quellen jeweils mindestens 87 % in Masse an Zirkoniumoxid enthalten, und

f) Herstellung eines Pulvers enthaltend, in Prozentangaben in Masse:

- Mindestens 60 % der besagten Quelle für Zuschlagteilchen aus Zirkoniumoxid, wobei die Menge der besagten Quelle für Zuschlagteilchen aus Zirkoniumoxid ferner derart bestimmt wird, dass das besagte Pulver mehr als 5 % in Masse an Zuschlagteilchen aus Zirkoniumoxid enthält, welche eine Größe von größer als 1 mm aufweisen und;

- zwischen 8 und 31 % der besagten Quelle für Matrixteilchen aus monoklinem Zirkoniumoxid;

- 1 % bis 2 % der besagten Quelle für Feinteilchen aus Siliziumoxid;

- 0,3 % bis 5 % der besagten Quelle für Zusatzteilchen aus Oxiden;

- wobei das Komplement zu 100 % die besagte Quelle für Matrixteilchen aus Zirkoniumoxid ist.

14. Feuerfestes gesintertes Produkt erhalten durch Sintern einer Vorform erhalten ausgehend von einem Pulver nach irgend einem der Ansprüche 1 bis 12 oder produziert gemäß einem Verfahren nach dem vorhergehenden Anspruch.

15. Anlage enthaltend:

- Eine Wand und eine die besagte Wand schützende Barriere; und/oder

- Mittel zum Leiten eines Abflusses einer Flüssigkeit oder zum Verhindern solch eines Abflusses,

wobei die besagte Barriere oder die besagten Mittel zum Leiten oder zum Verhindern des besagten Abflusses ein feuerfestes Produkt nach dem vorhergehenden Anspruch enthält / enthalten, welches angeordnet ist in Kontakt mit einer Umgebung, die möglicherweise korrosiv sein und/oder einen thermischen Schock schaffen könnte, so dass sich die Temperatur um mindestens 750 °C in weniger als 1 Minute ändert.

16. Anlage nach dem vorhergehenden Anspruch, ausgewählt aus einem Reaktor zum Herstellen von Industrieruß, einem Ausrüstungsgegenstand der metallurgischen Industrie, einem Verbrennungskessel, einem Glasofen, einem petrochemischen Reaktor und einem Zementofen.

**Claims**

1. A powder including more than 85% of zirconia, in percentage by weight, and being constituted, for a total of 100%, in percentages by weight, based on oxides of:

(a) more than 92% of zirconia particles, said powder comprising:

(a1) more than 60% of zirconia particles having a size larger than 50 microns, called "zirconia aggregate particles", at least 90% by weight of said zirconia aggregate particles containing less than 50% by weight of monoclinic phase;

(a2) more than 15% of zirconia particles having a size smaller than 50 μm, called "matrix particles of zirconia";

(b) 1% to 2% of silica particles having a size smaller than 50 microns, called "fine silica particles";

(c) 0.3% to 5% of particles consisting of one, two or three oxides selected from the group formed by CaO, MgO and Y$_2$O$_3$, called " additional oxide particles", at least 55% by weight of said additional particles have a size smaller than 50 μm; and

(d) less than 1% of particles consisting of "other oxides";

said powder also being such that it comprises:

- more than 5% of zirconia aggregate particles which size is larger than 1 mm; and -

- from 8% to 20% of matrix particles of zirconia having a size smaller than 15 μm and comprising, to more than 95% of their mass, a monoclinic phase, called "matrix particles of monoclinic zirconia".

2. The powder according to the preceding claim, wherein more than 95 wt.% of the CaO particles and of the $Y_2O_3$ particles sizes are smaller than 20 $\mu$m.

3. The powder according to anyone of the preceding claims, wherein the content by weight of zirconia $ZrO_2$ is greater than 90%.

4. The powder according to anyone of the preceding claims, wherein the zirconia of the zirconia aggregate particles that comprise less than 50 wt.% of monoclinic phase is partially stabilized or fully stabilized with magnesia MgO and/or with lime CaO.

5. The powder according to the preceding claim, wherein said zirconia is stabilized at least partly with magnesia, the content by weight of magnesia being between 2.9% and 4.5%.

6. The powder according to anyone of the preceding claims, wherein more than 15% of the zirconia aggregate particles have a size greater than 1 mm, as percentage by weight based on the powder.

7. The powder according to anyone of the preceding claims, wherein the zirconia aggregate particles are fused particles.

8. The powder according to anyone of the preceding claims, wherein the matrix particles of monoclinic zirconia represent more than 11% and less than 16% of the weight of the powder.

9. The powder according to anyone of the preceding claims, wherein the additional oxide particles represent more than 1% and less than 2% of the weight of the powder.

10. The powder according to anyone of the preceding claims, wherein the additional oxide particles comprise $Y_2O_3$ particles and MgO particles.

11. The powder according to the preceding claim, comprising more than 0.2% and less than 0.8% of $Y_2O_3$ particles, and more than 0.9% and less than 1.5% of MgO particles.

12. The powder according to anyone of the preceding claims, comprising more than 60% of zirconia particles which size is smaller than 7 mm, as percentage by weight based on the oxides.

13. A method of preparing a powder according to anyone of the preceding claims, comprising the following steps:

a) selecting a source of zirconia aggregate particles comprising at least 30% by weight of zirconia particles which size is larger than 50 microns, called "zirconia aggregate particles", at least 90% by weight of said zirconia aggregate particles containing less than 50% by weight of monoclinic phase,
b) selecting a "source of zirconia matrix particles" comprising at least 50% by weight of zirconia particles which size is smaller than 50 $\mu$m, called "matrix particles of zirconia",
c) selecting a "source of matrix particles of monoclinic zirconia" comprising more than 50% by weight of matrix particles of zirconia having a size smaller than 15 $\mu$m and comprising, to more than 95% of their mass, a monoclinic phase, called "matrix particles of monoclinic zirconia";
d) selecting a "source of fine silica particles" comprising at least 87% by weight of silica particles which size is smaller than 50 $\mu$m, "called fine silica particles",
e) selecting a "source of additional oxide particles" comprising at least 87% by weight of particles consisting of one, two or three oxides selected from the group formed by CaO, MgO and $Y_2O_3$, called "additional oxide particles", wherein at least 55 wt.% of said additional oxide particles have a size smaller than 50 $\mu$m;
the sources selected in step a), b) and c) each comprising at least 87% by weight of zirconia, and f) preparing a powder comprising, in percentages by weight:

- at least 60% of said source of zirconia aggregate particles, the amount of said source of zirconia aggregate particles being determined moreover such that said powder comprises more than 5% by weight of zirconia aggregate particles which size is larger than 1 mm and;
- between 8% and 31% of said source of matrix particles of monoclinic zirconia;
- 1% to 2% of said source of fine silica particles;

- 0.3% to 5% of said source of additional oxide particles;
- the complement to 100% being said source of matrix particles of zirconia.

**14.** A sintered refractory obtained by sintering a green part obtained from a powder according to anyone of claims 1 to 12 or manufactured by a method according the preceding claim.

**15.** An installation comprising:

- a wall and a barrier protecting said wall; and/or
- means for directing a flow of a liquid or for hindering said flow,

said barrier or said means for directing or hindering said flow comprising a refractory product according to the preceding claim arranged in contact with an environment that may be corrosive and/or may create a thermal shock such that the temperature changes by at least 750°C in less than 1 minute.

**16.** The installation according to the preceding claim, selected from a reactor for manufacturing carbon black, an equipment in the metallurgical industry, an incinerator, a glassmaking furnace, a petrochemical reactor and a cement kiln.

Fig. 1

$\Delta l / l_0$

F

a

900°C        1300°C

T

## RÉFÉRENCES CITÉES DANS LA DESCRIPTION

**Documents brevets cités dans la description**

- EP 0404610 A
- US 4513089 A
- US 4308067 A
- US 2335325 A

**Littérature non-brevet citée dans la description**

- **A.G. KARAULOV et al.** Zirconia ramming compounds tested in induction furnaces. *Refractories and Industrial Ceramics,* 1974, vol. 15 (3-4